(19) Europäisches Patentamt
European Patent Office
Office européen des brevets

(11) **EP 2 528 217 B1**

(12) **EUROPÄISCHE PATENTSCHRIFT**

(45) Veröffentlichungstag und Bekanntmachung des Hinweises auf die Patenterteilung:
**20.06.2018 Patentblatt 2018/25**

(51) Int Cl.:
*H02M 7/5387* (2007.01)  *H02M 7/538* (2007.01)
*H02M 3/337* (2006.01)  *H02M 1/00* (2006.01)

(21) Anmeldenummer: **12167130.9**

(22) Anmeldetag: **08.05.2012**

(54) **Zweiquadrantensteller**

Two-quadrant chopper

Hacheur à deux quadrants

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.05.2011 DE 102011076512**

(43) Veröffentlichungstag der Anmeldung:
**28.11.2012 Patentblatt 2012/48**

(73) Patentinhaber: **Beckhoff Automation GmbH 33415 Verl (DE)**

(72) Erfinder: **Krah, Jens Onno 42327 Wuppertal (DE)**

(74) Vertreter: **Patentanwaltskanzlei WILHELM & BECK Prinzenstraße 13 80639 München (DE)**

(56) Entgegenhaltungen:
JP-A- H02 299 499   JP-A- 2001 197 757
US-A- 5 621 628

• PHILIP C TODD: "Snubber Circuits: Theory, Design and Application", INTERNET CITATION, 31. Mai 1993 (1993-05-31), XP002447016, Gefunden im Internet: URL:http://focus.ti.com/lit/an/slup100/slup100.pdf [gefunden am 2007-08-16]
• "Chapter 14: Resonance and Ringing" In: D V Bugg: "Electronics: Circuits, Amplifiers and Gates", 2005, IOP Publishing Ltd, U.K., XP002682728, ISBN: 0 7503 1037 5 Seiten 261-276, * Seite 266 - Seite 268 *

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Zweiquadrantensteller, ein Verfahren zum Betreiben eines Zweiquadrantenstellers sowie eine Ansteuerschaltung für einen elektrischen Antrieb.

Es ist bekannt, zur Steuerung und Regelung elektrischer Antriebe Frequenzumrichter mit Spannungszwischenkreis zu verwenden. Entsprechende Ansteuerschaltungen erzeugen zunächst aus einer Netzspannung, zumeist einer ersten Dreiphasendrehspannung, über eine B6-Diodenbrücke oder über einen Einspeiseumrichter eine Gleichspannung. Die erzeugte Gleichspannung kann beispielsweise einen Betrag von 700 V aufweisen. Die Gleichspannung wird anschließend durch die Ansteuerschaltung über einen Umrichter in eine zweite Dreiphasendrehspannung mit in Grenzen einstellbarer Amplitude und Frequenz umgeformt. Durch Variation von Amplitude und Frequenz können Drehmoment und Drehzahl eines mit der zweiten Dreiphasendrehspannung versorgten Elektromotors eingestellt werden.

Der Umrichter zur Erzeugung der zweiten Dreiphasendrehspannung weist üblicherweise sechs leistungselektronische Schalter, typischerweise IGBT-Schalter, auf. Die leistungselektronischen Schalter werden beispielsweise mittels Pulsweitenmodulation nach dem Verfahren der Raumzeigermodulation angesteuert, um die zweite Dreiphasendrehspannung mit der gewünschten Amplitude und Frequenz zu erzeugen.

Die leistungselektronischen IGBT-Schalter arbeiten nicht ideal. Sind die Schalter leitend geschaltet, so fallen an ihnen Durchlassverluste an. Außerdem fallen während des Schaltens der Schalter Schaltverluste an.

Werden die leistungselektronischen Schalter mit hoher Schaltfrequenz angesteuert, so ergeben sich kurze Reaktionszeiten und eine geringe Stromwelligkeit, jedoch auch hohe Schaltverluste. Werden die leistungselektronischen Schalter mit einer niedrigen Schaltfrequenz angesteuert, so sinken die Schaltverluste, wodurch der Wirkungsgrad steigt. Eine niedrige Schaltfrequenz geht jedoch mit verschlechterten Reaktionszeiten und einer stärkeren Stromwelligkeit einher.

Es wäre ebenfalls möglich, die als Netzspannung bereitstehende erste Dreiphasendrehspannung direkt mittels eines dreiphasigen Spartransformators mit einstellbarer Amplitude in die zweite Dreiphasendrehspannung zur Versorgung des Elektromotors zu wandeln. Derartige dreiphasige Spartransformatoren weisen jedoch eine erhebliche Baugröße und einen vergleichsweise geringen Wirkungsgrad auf.

Anstelle eines Umrichters mit IGBT-Schaltern könnte auch ein Umrichter mit MOSFET-Schalttransistoren eingesetzt werden. Damit ließen sich kleinere Antriebe bis ca. 2 kW Leistung betreiben. Geeignete MOSFET-Schalttransistoren sind mit Sperrspannungen bis etwa 600 V erhältlich. Damit können Frequenzumrichter mit Zwischenkreisspannungen bis ca. 400 $V_{dc}$ aufgebaut werden.

Der Wirkungsgrad solcher MOSFET-Umrichter kann über 99% betragen. Durch die geringeren Verluste kann der MOSFET-Umrichter besonders kompakt aufgebaut werden, was eine Integration des MOSFET-Umrichters in den Motor ermöglicht.

Ein motorintegrierter MOSFET-Umrichter kann dann durch eine Gleichspannung von ca. 350 $V_{dc}$ mit Energie versorgt werden. Diese Versorgungsspannung von 350 $V_{dc}$ kann beispielsweise mittels eines Tiefsetzstellers bzw. Einquadrantenstellers aus der aus der Netzspannung gewonnenen höheren Gleichspannung erzeugt werden. Die Leistungshalbleiter und die Induktivität des Tiefsetzstellers müssen dabei auf den maximal möglichen Spitzenstrom ausgelegt werden. Dadurch ergeben sich wiederum Leistungsverluste des Tiefsetzstellers, die den Wirkungsgrad des gesamten Antriebssystems verschlechtern.

Anstelle eines Tiefsetzstellers oder Einquadrantenstellers könnte auch ein Zweiquadrantensteller verwendet werden. Dann ist eine Rückspeisung von im Antrieb gespeicherter Energie mit relativ gutem Wirkungsgrad möglich.

Die JP 2001 197757 A beschreibt eine Ansteuerschaltung mit einer symmetrischen Schaltung, bei der eine Regelung bewirkt, dass ein Verbindungspunkt zwischen zwei in Serie angeordneten Kondensatoren zum Bezugspunkt einer mittels eines Inverters erzeugten Wechselspannung wird, auch wenn eine durch die Wechselspannung versorgte Last die Wechselspannung während positiver und negativer Halbwellen unterschiedlich stark belastet. Die symmetrische Schaltung ist parallel zu den Kondensatoren angeordnet und weist zwei in Serie angeordnete Schalter auf. Ein Strommessglied ist zwischen einem Verbindungspunkt der Schalter und dem Verbindungspunkt zwischen den Kondensatoren angeordnet.

JP H02 299499 A zeigt eine Ansteuerschaltung für einen elektrischen Antrieb mit zwei Umrichtern zum Erzeugen zweier dreiphasiger Drehspannungen aus zwei Ausgangsspannungen. Die Aufgabe der vorliegenden Erfindung besteht darin, eine Ansteuerschaltung mit erhöhtem Wirkungsgrad bereitzustellen. Diese Aufgabe wird durch eine Ansteuerschaltung mit den Merkmalen des Patentanspruchs 1 gelöst. Es ist außerdem eine Aufgabe der vorliegenden Erfindung, ein Verfahren zum Betreiben eines Zweiquadrantenstellers mit erhöhtem Wirkungsgrad anzugeben. Diese Aufgabe wird durch ein Verfahren mit den Merkmalen des Patentanspruchs 8 gelöst. Bevorzugte Weiterbildungen sind in den abhängigen Ansprüchen angegeben.

Eine erfindungsgemäße Ansteuerschaltung umfasst einen Zweiquadrantensteller mit einem ersten Knoten, einem zweiten Knoten, einem dritten Knoten und einem vierten Knoten auf. Zwischen dem ersten Knoten und dem zweiten Knoten kann eine Eingangsspannung angelegt werden. Zwischen dem ersten Knoten und dem dritten Knoten kann eine erste Ausgangsspannung abgegriffen werden. Zwischen dem dritten Knoten und dem zweiten Knoten kann eine zweite Ausgangsspannung abgegriffen werden. Ein erster Kondensator ist zwischen dem ersten Knoten und dem dritten Knoten angeordnet. Ein zweiter Kondensator ist zwischen dem dritten Knoten und dem zweiten Knoten angeordnet. Ein Kollektor eines ersten Transistors ist mit dem ersten Knoten und ein Emitter des ersten Transistors mit dem vierten Knoten verbunden. Eine Kathode einer ersten Diode ist mit dem ersten Knoten und eine Anode der ersten Diode mit dem vierten Knoten verbunden. Ein Kollektor eines zweiten Transistors ist mit dem vierten Knoten und ein Emitter des zweiten Transistors mit dem zweiten Knoten verbunden. Eine Kathode einer zweiten Diode ist mit dem vierten Knoten und eine Anode der zweiten Diode mit dem zweiten Knoten verbunden. Außerdem ist eine Spule zwischen dem dritten Knoten und dem vierten Knoten angeordnet. Der Zweiquadrantensteller weist eine Vorrichtung zum Messen eines durch die Spule fließenden elektrischen Stroms auf. Außerdem weist der Zweiquadrantensteller eine Einrichtung auf, die dazu ausgebildet ist, den ersten Transitor und den zweiten Transistor gemäß eines Modulationsindexes wechselweise zwischen leitendem und sperrendem Zustand umzuschalten. Dabei wird der Modulationsindex so bemessen, dass er gleich der Summe aus dem Wert 0,5 und dem Verhältnis des Produkts der in der Spule fließenden Stromstärke und eines festgelegten virtuellen Widerstands zur Größe der Eingangsspannung ist.

Vorteilhafterweise werden bei diesem Zweiquadrantensteller die Zwischenkreiskondensatoren gleichzeitig als Ausgangskondensatoren verwendet, wodurch der erfindungsgemäße Zweiquadrantensteller weniger Bauteile aufweist als ein herkömmlicher Zweiquadrantensteller. Vorteilhafterweise können mit dem Zweiquadrantensteller zwei Antriebe bzw. zwei Gruppen von Antrieben mit in Summe ähnlicher Spitzenleistung in Reihe betrieben werden. Der Zweiquadrantensteller symmetrisiert dann vorteilhafterweise die an die Antriebsgruppen angelegten Spannungen, so dass der Zweiquadrantensteller nur den Differenzstrom zwischen den in die Antriebsgruppen fließenden Strömen bereitstellen und nur die Leistungsdifferenz der beiden Antriebsgruppen ausgleichen muss. Dadurch kann vorteilhafterweise die Bauleistung des erfindungsgemäßen Zweiquadrantenstellers gegenüber einem herkömmlichen Zweiquadrantensteller halbiert werden. Vorteilhafterweise verbessert sich hierdurch der Wirkungsgrad des erfindungsgemäßen Zweiquadrantenstellers erheblich.

Vorteilhafterweise kann durch die Variation des Modulationsindex eine Spannungsänderung bewirkt werden, die sich genauso verhält, wie ein stromabhängiger Spannungsabfall über einen realen Widerstand. Somit wird durch die Variation des Modulationsindexes ein virtueller Widerstand eingefügt, der vorteilhafterweise eine Dämpfung der im Zweiquadrantensteller gebildeten Schwingkreise bewirkt, ohne mit den an einem realen elektrischen Widerstand auftretenden Leistungsverlusten einher zu gehen.

Bevorzugt sind der erste Transistor und/oder der zweite Transistor Bipolartransistoren mit isolierter Gate-Elektrode (IGBT). Vorteilhafterweise eignen sich derartige Transistoren zum Schalten hinreichend großer Spannungen und Leistungen.

In einer besonders bevorzugten Ausführungsform des Zweiquadrantenstellers weist dieser eine Hilfswicklung auf, die gemeinsam mit der Spule einen Transformator bildet. Vorteilhafterweise kann dann mit diesem Transformator mit sehr gutem Wirkungsgrad und geringem zusätzlichen Aufwand Leistung aus dem Zwischenkreis ausgekoppelt werden. Die Leistung wird dabei vorteilhafterweise aus dem Kondensator der beiden Kondensatoren des Zweiquadrantenstellers entnommen, der die größere Spannung aufweist. Durch diese implizierte Symmetrierung verbessert sich der Wirkungsgrad des Zweiquadrantenstellers vorteilhafterweise zusätzlich.

Besonders bevorzugt weist der Zweiquadrantensteller zusätzlich einen Gleichrichter und einen weiteren Kondensator auf, wobei der weitere Kondensator über den Gleichrichter mit der Hilfswicklung verbunden ist. Vorteilhafterweise kann der weitere Kondensator dann über den Gleichrichter durch den aus der Hilfswicklung gebildeten Transformator geladen werden. Die am weiteren Kondensator aufgebaute Spannung kann dann vorteilhafterweise zur Versorgung zusätzlicher Baueinheiten, beispielsweise zur Versorgung einer Motorbremse mit 24 $V_{dc}$, genutzt werden. Ein besonderer Vorteil ergibt sich dann daraus, dass in rotierenden Massen eines Antriebssystems gespeicherte Energie im Fall eines Netzausfalls zur unterbrechungsfreien Stromversorgung der weiteren Komponenten genutzt werden kann. Über den Zweiquadrantensteller wird die in den rotierenden Massen gespeicherte Energie zurückgespeist und über die Hilfswicklung zur unterbrechungsfreien Versorgung der weiteren Komponenten genutzt.

In einer Ausführungsform des Zweiquadrantenstellers ist ein elektrischer Widerstand in Serie mit der Spule zwischen dem dritten Knoten und dem vierten Knoten des Zweiquadrantenstellers angeordnet. Vorteilhafterweise erhöht der elektrische Widerstand dann einen Dämpfungsgrad von im Zweiquadrantensteller gebildeten Schwingkreisen, wodurch sich die regeltechnischen Eigenschaften des Zweiquadrantenstellers verbessern.

In einer bevorzugten Ausführungsform umfasst die Vorrichtung zum Messen des Stroms einen Nebenschlusswiderstand bzw. Shunt. Vorteilhafterweise ermöglicht ein solcher Nebenschlusswiderstand eine zuverlässige und verlustarme Messung des elektrischen Stroms in der Spule.

In einer Ausführungsform des Zweiquadrantenstellers weist die Spule eine Induktivität von 1 mH (Millihenry) auf. Vorteilhafterweise hat sich dieser Wert als geeignet zur Ansteuerung von Antriebskomponenten mit einer Leistung im Bereich einiger Kilowatt erwiesen.

In einer Ausführungsform des Zweiquadrantenstellers weisen der erste Kondensator und der zweite Kondensator jeweils eine Kapazität von 500 μF (Mikrofarad) auf. Vorteilhafterweise haben sich diese Kapazitäten als geeignet für die Ansteuerung von Antriebssystemen mit einer Leistung im Bereich einiger Kilowatt erwiesen.

Bei einem erfindungsgemäßen Verfahren zum Betreiben eines Zweiquadrantenstellers, der nach der vorgenannten Art ausgebildet ist, wird in einem ersten Zeitintervall mit einer ersten Dauer der erste Transistor in einem leitenden Zustand und der zweite Transistor in einem sperrenden Zustand betrieben. Außerdem wird in einem zweiten Zeitintervall mit einer zweiten Dauer der erste Transistor in einem sperrenden Zustand und der zweite Transistor in einem leitenden Zustand betrieben. Dabei folgt nach dem zweiten Zeitintervall wieder ein erstes Zeitintervall. Dabei werde die erste und die zweite Dauer so bemessen, dass das Verhältnis der ersten Dauer zur Summe der ersten und der zweiten Dauer gleich der Summe aus dem Wert 0,5 und dem Verhältnis des Produkts der in der Spule fließenden Stromstärke und eines festgelegten virtuellen Widerstands zur Größe der Eingangsspannung ist. Vorteilhafterweise wird bei diesem Verfahren immer die volle Betriebsspannung geschaltet, wodurch im Prinzip nur Umschaltverluste auftreten. Dadurch lassen sich vorteilhafterweise gute Wirkungsgrade erzielen. Vorteilhafterweise kann über die Dauern der Zeitintervalle eine Welligkeit der erzeugten Ausgangsspannungen beeinflusst werden. Vorteilhafterweise wird durch dieses Verfahren ein virtueller Widerstand in den Zweiquadrantensteller eingefügt, der eine Dämpfung der im Zweiquadrantensteller gebildeten Schwingkreise bewirkt, ohne dass eine Verlustleistung anfällt. Vorteilhafterweise verbessert sich dadurch das regeltechnische Verhalten des Zweiquadrantenstellers.

In einer Ausführungsform des Verfahrens weist der festgelegte virtuelle Widerstand eine Größe von 1 Ω (Ohm) auf. Vorteilhafterweise hat sich erwiesen, dass ein virtueller Widerstand von 1 Ω ein ausreichend gedämpftes Verhalten des Zweiquadrantenstellers bewirkt.

In einer bevorzugten Ausführungsform der Ansteuerschaltung umfasst diese einen Gleichrichter, der dazu vorgesehen ist, aus einer Netzspannung eine erste Gleichspannung zu erzeugen, wobei die erste Gleichspannung als Eingangsspannung an den Zweiquadrantensteller angelegt werden kann. Vorteilhafterweise kann die erste Gleichspannung durch den Gleichrichter mit einem hohen Spannungswert erzeugt werden und diese hohe Gleichspannung anschließend durch den Zweiquadrantensteller in zwei Ausgangsspannungen mit niedrigerem Spannungsbetrag gewandelt werden.

In einer Ausführungsform der Ansteuerschaltung umfasst der Gleichrichter eine B6-Diodenbrücke.

In einer anderen Ausführungsform der Ansteuerschaltung umfasst der Gleichrichtung einen Einspeiseumrichter.

Die Ansteuerschaltung umfasst außerdem einen Umrichter, der dazu vorgesehen ist, aus einer zweiten Gleichspannung eine dreiphasige Drehspannung zu erzeugen, wobei die erste Ausgangsspannung oder die zweite Ausgangsspannung des Zweiquadrantenstellers als zweite Gleichspannung an den Umrichter angelegt werden kann. Vorteilhafterweise kann die durch den Umrichter erzeugte dreiphasige Drehspannung dann zur Versorgung eines elektrischen Antriebs dienen. Vorteilhafterweise kann der Umrichter dabei kompakt und kostengünstig ausgeführt werden, da die an den Umrichter angelegte zweite Gleichspannung nur einen geringen Spannungsbetrag aufweist.

In einer besonders bevorzugten Ausführungsform der Ansteuerschaltung weist der Umrichter einen MOSFET-Transistor auf. Vorteilhafterweise gestattet es der vergleichsweise niedrige Spannungsbetrag der zweiten Gleichspannung, den Umrichter mit MOSFET-Transistoren auszubilden, die einen sehr hohen Wirkungsgrad ermöglichen. Dadurch werden die im Umrichter auftretenden Verluste minimiert, wodurch der Umrichter platzsparend und kostengünstig ausgebildet werden kann.

In einer Weiterbildung der Ansteuerschaltung ist der Umrichter in einen Motor integriert. Vorteilhafterweise wird es durch die Möglichkeit, den Umrichter kompakt auszubilden, möglich, den Umrichter in einen Motor zu integrieren, wodurch sich für die gesamte Ansteuerschaltung eine kompakte Bauform ergibt. Vorteilhafterweise entfallen durch die Integration des Umrichters in den Motor auch Kabelkapazitäten.

Die Erfindung wird nachfolgend anhand von Figuren näher erläutert. Dabei zeigen:

    Figur 1 eine schematische Blockdarstellung einer Ansteuerschaltung;

    Figur 2 eine Schaltungsanordnung eines Umrichters; und

    Figur 3 eine Schaltungsanordnung eines Zweiquadrantenstellers.

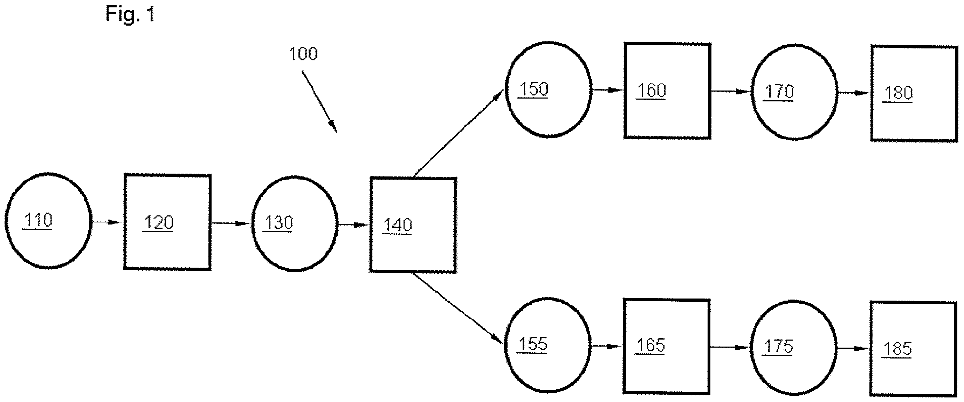

Figur 1 zeigt eine schematische Blockdarstellung einer Ansteuerschaltung 100 zur Ansteuerung eines elektrischen Antriebs. Die Ansteuerschaltung 100 kann beispielsweise zur Ansteuerung eines elektrischen Antriebs eines Kraftfahrzeugs dienen. Die Ansteuerschaltung 100 kann jedoch auch in der Automationstechnik oder in anderen technischen Gebieten, in denen drehzahlgeregelte Antriebe verwendet werden, genutzt werden.

Die Ansteuerschaltung 100 dient dazu, einen ersten Motor 180 und einen zweiten Motor 185 aus einer Netzspannung 110 zu versorgen. Anstelle des ersten Motors 180 könnte auch eine ganze Gruppe erster Antriebe vorgesehen sein. Anstelle des zweiten Motors 185 könnte auch eine ganze Gruppe zweiter Antriebe vorgesehen sein.

Der erste Motor 180 wird durch eine erste Dreiphasendrehspannung 170 mit Energie versorgt. Der zweite Motor 185 wird durch eine zweite Dreiphasendrehspannung 175 mit Energie versorgt. Drehzahlen und Drehmomente der Motoren 180, 185 können in Grenzen durch Frequenzen und Amplituden der ersten Dreiphasendrehspannung 170 und der zweiten Dreiphasendrehspannung 175 vorgegeben werden.

Die Netzspannung 110 ist üblicherweise ebenfalls eine Dreiphasendrehspannung. Die Netzspannung 110 weist jedoch eine festgelegte Frequenz und eine festgelegte Amplitude auf. Zur Einstellung der Drehzahlen und Drehmomente der Motoren 180, 185 muss die Netzspannung 110 mit fester Frequenz und Amplitude also mit einstellbaren Frequenzen und Amplituden in die erste Dreiphasendrehspannung 170 und die zweite Dreiphasendrehspannung 175 gewandelt werden. Hierzu dient in der Ansteuerschaltung 100 ein nachfolgend erläuterter Frequenzumrichter mit Spannungszwischenkreis.

Die Ansteuerschaltung 100 weist einen Gleichrichter 120 auf, der aus der Netzspannung 110 eine erste Gleichspannung 130 erzeugt. Derartige Gleichrichter sind aus dem Stand der Technik bekannt. Bei dem Gleichrichter 120 kann es sich beispielsweise um eine B6-Diodenbrücke oder um einen Einspeiseumrichter handeln. Die durch den Gleichrichter 120 erzeugte erste Gleichspannung 130 kann beispielsweise einen Spannungswert von 700 $V_{dc}$ aufweisen.

Die erste Gleichspannung 130 wird in der Ansteuerschaltung 100 einem Zweiquadrantensteller 140 zugeführt, der aus der ersten Gleichspannung 130 eine zweite Gleichspannung 150 und eine dritte Gleichspannung 155 generiert. Die zweite Gleichspannung 150 und die dritte Gleichspannung 155 weisen eine geringere Spannung als die erste Gleichspannung 130 auf. Falls die erste Gleichspannung 130 700 $V_{dc}$ beträgt, so können die zweite Gleichspannung 150 und die dritte Gleichspannung 155 beispielsweise jeweils 350 $V_{dc}$ aufweisen.

Die zweite Gleichspannung 150 wird durch einen ersten Umrichter 160 der Ansteuerschaltung 100 in die erste Dreiphasendrehspannung 170 gewandelt. Der erste Umrichter 160 gestattet es dabei, Amplitude und Frequenz der ersten Dreiphasendrehspannung 170 in Grenzen frei festzulegen. Die dritte Gleichspannung 155 wird durch einen zweiten Umrichter 165 der Ansteuerschaltung 100 in die zweite Dreiphasendrehspannung 175 gewandelt. Dabei erlaubt es auch der zweite Umrichter 165, Frequenz und Amplitude der zweiten Dreiphasendrehspannung 175 in Grenzen einzustellen. Durch die Einstellung von Amplituden und Frequenzen der Drehspannungen 170, 175 können Drehmomente und Drehzahlen der durch die Dreiphasendrehspannungen 170, 175 versorgten Motoren 180, 185 eingestellt werden.

Der Gleichrichter 120 kann auch als Drei-Level-Umrichter ausgebildet werden. In diesem Fall kann dieser beispielsweise zur Realisierung einer Netzrückspeisung genutzt werden, um Energie von den Motoren 180, 185 über die Umrichter 160, 165, den Zweiquadrantensteller 140 und den Drei-Level-Umrichter 120 zurück in das Versorgungsnetz zu speisen. Der als Drei-Level-Umrichter ausgebildete Gleichrichter 120 kann die Spannungen 150 und 155 auch aktiv symmetrieren, was eine parallel wirksame Verbesserung des Wirkungsgrads der Ansteuerschaltung 100 zur Folge hätte.

An die beiden Spannungen 120 und 155 kann auch ein weiterer Drei-Level-Umrichter angeschlossen werden, der z.B. einen Spindelantrieb mit besonders hoher Frequenz versorgt, oder einen hochdynamischen Servoantrieb ansteuert.

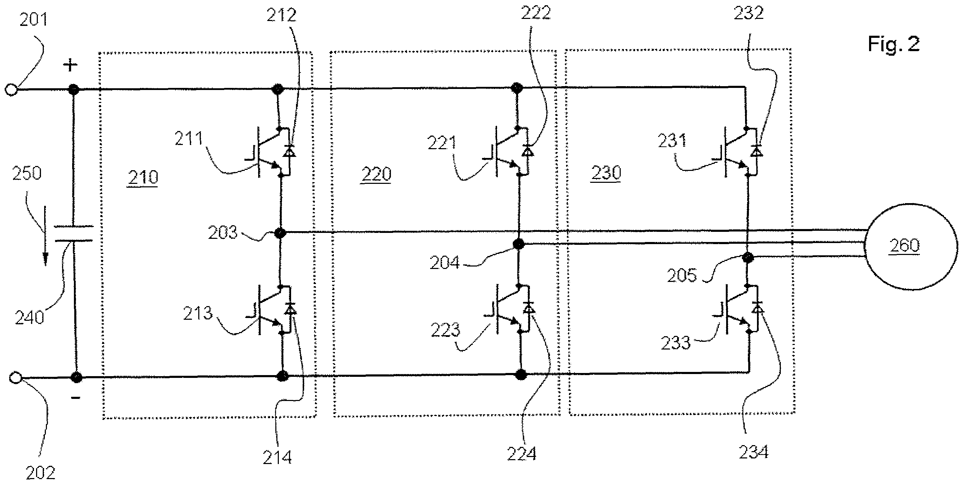

Der erste Umrichter 160 und der zweite Umrichter 165 können als Zwei-Level-Umrichter gemäß Figur 2 ausgebildet sein.

Figur 2 zeigt eine Schaltungsanordnung eines beispielhaften Zwei-Level-Umrichters 200.

Der Umrichter 200 weist einen ersten Schaltungsknoten 201, einen zweiten Schaltungsknoten 202, einen dritten Schaltungsknoten 203, einen vierten Schaltungsknoten 204 und einen fünften Schaltungsknoten 205 auf.

Weiter weist der Umrichter 200 eine erste Halbbrücke 210, eine zweite Halbbrücke 220 und eine dritte Halbbrücke 230 auf. Die erste Halbbrücke 210 umfasst einen ersten Transistor 211, eine erste Diode 212, einen zweiten Transistor 213 und eine zweite Diode 214. Ein Kollektor des ersten Transistors 211 ist mit dem ersten Knoten 201 verbunden. Ein Emitter des ersten Transistors 211 ist mit dem dritten Knoten 203 verbunden. Eine Kathode der ersten Diode 212 ist mit dem ersten Knoten 201 verbunden. Eine Anode der ersten Diode 212 ist mit dem dritten Knoten 203 verbunden. Ein Kollektor des zweiten Transistors 213 ist mit dem dritten Knoten 203 verbunden. Ein Emitter des zweiten Transistors 213 ist mit dem zweiten Knoten 202 verbunden. Eine Kathode der zweiten Diode 214 ist mit dem dritten Knoten 203 verbunden. Eine Anode der zweiten Diode 214 ist mit dem zweiten Knoten 202 verbunden.

Die zweite Halbbrücke 220 umfasst einen dritten Transistor 221, eine dritte Diode 222, einen vierten Transistor 223 und eine vierte Diode 224. Ein Kollektor des dritten Transistors 221 ist mit dem ersten Knoten 201 verbunden. Ein Emitter des dritten Transistors 221 ist mit dem vierten Knoten 204 verbunden. Eine Kathode der dritten Diode 222 ist mit dem ersten Knoten 201 verbunden. Eine Anode der dritten Diode 222 ist mit dem vierten Knoten 204 verbunden. Ein Kollektor des vierten Transistors 223 ist mit dem vierten Knoten 204 verbunden. Ein Emitter des vierten Transistors 223 ist mit dem zweiten Knoten 202 verbunden. Ein Kollektor der vierten Diode 224 ist mit dem vierten Knoten 204 verbunden. Eine Anode der vierten Diode 224 ist mit dem zweiten Knoten 202 verbunden.

Die dritte Halbbrücke 230 umfasst einen fünften Transistor 231, eine fünfte Diode 232, einen sechsten Transistor 233 und eine sechste Diode 234. Ein Kollektor des fünften Transistors 231 ist mit dem ersten Knoten 201 verbunden. Ein Emitter des fünften Transistors 231 ist mit dem fünften Knoten 205 verbunden. Eine Kathode der fünften Diode 232 ist mit dem ersten Knoten 201 verbunden. Eine Anode der fünften Diode 232 ist mit dem fünften Knoten 205 verbunden. Ein Kollektor des sechsten Transistor 233 ist mit dem fünften Knoten 205 verbunden. Ein Emitter des sechsten Transistors 233 ist mit dem zweiten Knoten 202 verbunden. Eine Kathode der sechsten Diode 234 ist mit dem fünften Knoten 205 verbunden. Eine Anode der sechsten Diode 234 ist mit dem zweiten Knoten 202 verbunden.

Der Umrichter 200 weist außerdem einen Kondensator 240 auf, der zwischen dem ersten Knoten 201 und dem zweiten Knoten 202 angeordnet ist.

Parallel zum Kondensator 240 kann zwischen dem ersten Knoten 201 und dem zweiten Knoten 202 eine Eingangsspannung 250 angelegt werden. Die Eingangsspannung 250 ist eine Gleichspannung, deren Pluspol an den ersten Knoten 201 und deren Minuspol an den zweiten Knoten 202 angelegt wird. Beim ersten Umrichter 160 der Ansteuerschaltung 100 der Figur 1 dient beispielsweise die zweite Gleichspannung 150 als Eingangsspannung 250. Beim zweiten Umrichter 165 der Ansteuerschaltung 100 dient die dritte Gleichspannung 155 als Eingangsspannung 250.

Am dritten Knoten 203 des Umrichters 200 kann eine erste Phase einer dreiphasigen Ausgangsspannung 260 abgegriffen werden. Am vierten Knoten 204 des Umrichters 200 kann eine zweite Phase der dreiphasigen Ausgangsspannung 260 abgegriffen werden. Am fünften Knoten 205 des Umrichters 200 kann eine dritte Phase der dreiphasigen Ausgangsspannung 260 abgegriffen werden. Die dreiphasige Ausgangsspannung 260 ist eine Dreiphasendrehspannung.

Im Betrieb des Umrichters 200 werden die Transistoren 211, 213, 221, 223, 231, 233 des Umrichters 200 über eine Pulsweitenmodulation nach den aus dem Stand der Technik bekannten Prinzipien der Sinusmodulation oder der Raumzeigermodulation angesteuert, um aus der Eingangsspannung 250 die Ausgangsspannung 260 mit festlegbarer Amplitude und Frequenz zu erzeugen. Die Transistoren 211, 213, 221, 223, 231, 233 werden im Stand der Technik als Bipolartransistoren mit isolierter Gate-Elektrode (IGBT-Transistoren) ausgebildet. Dabei arbeiten die Transistoren 211, 213, 221, 223, 231, 233 des Umrichters 200 allerdings nicht ideal. Es fallen Durchlassverluste an, wenn die Transistoren 211, 213, 221, 223, 231, 233 eingeschaltet sind. Zusätzlich fallen beim Ein- und Ausschalten der Transistoren 211, 213, 221, 223, 231, 233 Schaltverluste an. Werden die Transistoren 211, 213, 221, 223, 231, 233 mit hoher Schaltfrequenz geschaltet, so ergeben sich kurze Reaktionszeiten des Umrichters 200 und eine geringe Stromwelligkeit bzw. ein geringer Stromrippel eines durch die Ausgangsspannung 260 des Umrichters 200 getriebenen Stroms. Werden die Transistoren 211, 213, 221, 223, 231, 233 mit niedriger Schaltfrequenz geschaltet, so sinken im Gegenzug die Schaltverluste und es verbessert sich der Wirkungsgrad des Umrichters 200.

Wird mit der durch den Umrichter 200 erzeugten Ausgangsspannung 260 ein Antrieb mit geringer Leistung bis ca. 2 kW angetrieben, weisen also im Beispiel der Ansteuerschaltung 100 der Figur 1 die Motoren 180, 185 nur eine Leistungsaufnahme bis ca. 2 kW auf, so können für die Transistoren 211, 213, 221, 223, 231, 233 statt Bipolartransistoren mit isolierter Gate-Elektrode (IGBT-Transistoren) MOSFET-Transistoren eingesetzt werden. Da geeignete MOSFETs mit schneller Body-Diode jedoch lediglich mit Sperrspannungen bis etwa 600 V angeboten werden, darf die Eingangsspannung 250 des mit MOSFETs ausgebildeten Umrichters 200 einen Wert von etwa 400 $V_{dc}$ nicht überschreiten. Vorteilhafterweise ist die Verwendung von solchermaßen ausgebildeten Umrichtern 200 in der Ansteuerschaltung 100 der Figur 1 möglich, da die durch den Gleichrichter 120 erzeugte erste Gleichspannung 130 mit hohem Spannungswert durch den Zweiquadrantensteller 140 in die zweite Gleichspannung 150 und die dritte Gleichspannung 155 aufgeteilt wird, deren Spannungswerte ausreichend klein sind, um die Umrichter 160, 165 mit MOSFET-Transistoren auszubilden.

Der Wirkungsgrad des mit MOSFET-Transistoren ausgebildeten Umrichters 200 kann über 99% betragen. Durch die geringen Verluste ist eine Integration des Umrichters 200 in einen Motor besonders gut möglich. Durch die Verwendung von MOSFETs für den ersten Transistor 211, den zweiten Transistor 213, den dritten Transistor 221, den vierten Transistor 223, den fünften Transistor 231 und den sechsten Transistor 233 fällt statt einer Spannung von 1 bis 2 V pro Transistor bei Verwendung von IGBTs nur ein Bruchteil dieses Werts ($R_{DSON}$ * I) an. Da bei MOSFETs außerdem auch die Schaltverluste geringer sind, verringern sich die Verluste des Umrichters 200 auf weniger als die Hälfte gegenüber einem Umrichter mit IGBTs.

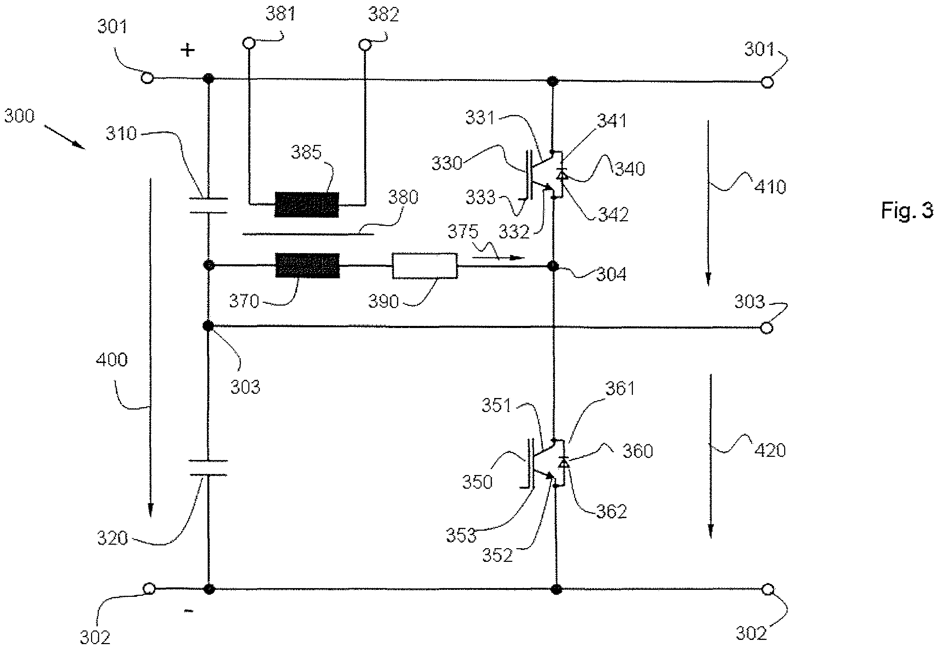

Figur 3 zeigt eine Schaltungsanordnung eines Zweiquadrantenstellers 300. Der Zweiquadrantensteller 300 der Figur 3 kann als Zweiquadrantensteller 140 in der Ansteuerschaltung 100 der Figur 1 verwendet werden.

Der Zweiquadrantensteller 300 weist einen ersten Spannungsknoten 301, einen zweiten Spannungsknoten 302, einen dritten Spannungsknoten 303 und einen vierten Spannungsknoten 304 auf.

Zwischen dem ersten Knoten 301 und dem zweiten Knoten 302 des Zweiquadrantenstellers 300 kann eine Eingangsspannung 400 angelegt werden. Die Eingangsspannung 400 ist eine Gleichspannung mit hohem Spannungswert von beispielsweise 700 $V_{dc}$. In der Ansteuerschaltung 100 der Figur 1 wird dem Zweiquadrantensteller 140 als Eingangsspannung 400 beispielsweise die erste Gleichspannung 130 zugeführt.

Zwischen dem ersten Knoten 301 und dem dritten Knoten 303 des Zweiquadrantenstellers 300 kann eine erste Ausgangsspannung 410 abgegriffen werden. Die erste Ausgangsspannung 410 ist eine Gleichspannung, deren Spannungswert niedriger als der Spannungswert der Eingangsspannung 400 ist. Beträgt die Eingangsspannung 400 beispielsweise 700 $V_{dc}$, so kann die erste Ausgangsspannung 410 beispielsweise 350 $V_{dc}$ betragen. Zwischen dem dritten Knoten 303 und dem zweiten Knoten 302 des Zweiquadrantenstellers 300 kann eine zweite Ausgangsspannung 420 abgegriffen werden. Die zweite Ausgangsspannung 420 ist ebenfalls eine Gleichspannung, deren Spannungswert geringer als der Spannungswert der Eingangsspannung 400 ist. Beträgt die Eingangsspannung 400 700 $V_{dc}$, so kann die zweite Ausgangsspannung 420 beispielsweise ebenfalls 350 $V_{dc}$ aufweisen. In der Ansteuerschaltung 100 der Figur 1 wird als erste Ausgangsspannung 410 die zweite Gleichspannung 150 und als zweite Ausgangsspannung 420 die dritte Gleichspannung 155 ausgegeben.

Der Zweiquadrantensteller 300 der Figur 3 weist einen ersten Kondensator 310 auf, der zwischen dem ersten Knoten 301 und dem dritten Knoten 303 angeordnet ist. Außerdem weist der Zweiquadrantensteller 300 einen zweiten Kondensator 320 auf, der zwischen dem dritten Knoten 303 und dem zweiten Knoten 302 angeordnet ist. Gemeinsam bilden der erste Kondensator 310 und der zweite Kondensator 320 einen Zwischenkreiskondensator des Zweiquadrantenstellers 300.

Der Zweiquadrantensteller 300 umfasst weiter einen ersten Transistor 330 und eine erste Diode 340. Ein Kollektor 331 des ersten Transistor 330 ist mit dem ersten Knoten 301 verbunden. Ein Emitter 332 des ersten Transistor 330 ist mit dem vierten Knoten 304 verbunden. Weiter weist der erste Transistor 330 ein Gate 333 auf, mit dem der erste Transistor 330 zwischen einem leitenden und einem sperrenden Zustand umgeschaltet werden kann. Eine Kathode 341 der ersten Diode 340 ist mit dem ersten Knoten 301 verbunden. Eine Anode 342 der ersten Diode 340 ist mit dem vierten Knoten 304 verbunden. Die erste Diode 340 ist somit als Freilaufdiode der Kollektor-Emitter-Strecke des ersten Emitters 330 parallel geschaltet.

Ferner umfasst der Zweiquadrantensteller 300 einen zweiten Transistor 350 und eine zweite Diode 360. Ein Kollektor 351 des zweiten Transistors 350 ist mit dem vierten Knoten 304 verbunden. Ein Emitter 352 des zweiten Transistors 350 ist mit dem zweiten Knoten 302 verbunden. Außerdem weist der zweite Transistor 350 ein Gate 353 auf, mit dem der zweite Transistor 350 zwischen einem sperrenden und einem leitenden Zustand umgeschaltet werden kann. Eine Kathode 361 der zweiten Diode 360 ist mit dem vierten Knoten 304 verbunden. Eine Anode 362 der zweiten Diode 360 ist mit dem zweiten Knoten 302 verbunden. Die zweite Diode 360 ist somit als Freilaufdiode der Kollektor-Emitter-Strecke des zweiten Transistors 350 parallel geschaltet.

Der erste Transistor 330 und der zweite Transistor 350 sind bevorzugt Bipolartransistoren mit isolierter Gate-Elektrode (IGBTs).

Der Zweiquadrantensteller 300 weist außerdem eine Spule 370 auf, die zwischen dem dritten Knoten 303 und dem vierten Knoten 304 des Zweiquadrantensteller 300 angeordnet ist.

Der Zweiquadrantensteller 300 der Figur 3 kann als Kombination eines Tiefsetzstellers bzw. Abwärtswandlers und eines Hochsetzstellers bzw. Aufwärtswandlers verstanden werden. Somit eignet sich der Zweiquadrantensteller 300 sowohl zur Speisung von Verbrauchern aus der Eingangsspannung 400 über die Ausgangsspannungen 410, 420, als auch zur Rückspeisung von Energie von im Generatorbetrieb betriebenen Verbrauchern. Im Unterschied zu einem herkömmlichen Zweiquadrantensteller werden beim Zweiquadrantensteller 300 der Figur 3 jedoch die Zwischenkreiskondensatoren 310, 320 gleichzeitig als Ausgangskondensatoren genutzt, wodurch Bauteile eingespart werden.

Vorteilhafterweise können durch den Zweiquadrantensteller 300 der Figur 3 gleichzeitig zwei Antriebe oder zwei Gruppen von Antrieben mit in Summe ähnlicher Spitzenleistung angetrieben werden. Die erste Gruppe von Antrieben wird dabei durch die erste Ausgangsspannung 410 versorgt. Die zweite Gruppe von Antrieben wird durch die zweite Ausgangsspannung 420 versorgt. Bei der Ansteuerschaltung 100 der Figur 1 steht der erste Motor 180 stellvertretend für die erste Gruppe von Antrieben. Der zweite Motor 185 steht stellvertretend für die zweite Gruppe von Antrieben.

Der Zweiquadrantensteller 300 muss lediglich eine Leistungsdifferenz zwischen den beiden Antriebsgruppen ausgleichen. Dadurch kann die Bauleistung des Zweiquadrantensteller 300 gegenüber einem herkömmlichen Zweiquadrantensteller halbiert werden. Hierdurch verbessert sich der Wirkungsgrad des Zweiquadrantenstellers 300 gegenüber einem herkömmlichen Zweiquadrantensteller erheblich. Im ungünstigsten Fall sind die Verluste im Zweiquadrantensteller 300 halb so groß wie bei einem herkömmlichen Zweiquadrantensteller. Im günstigsten Fall symmetrisch ausgebildeter Antriebsgruppen ist ein in der Spule 370 fließender Spulenstrom 375 sehr klein und es treten praktisch überhaupt keine Leistungsverluste auf.

Im Betrieb des Zweiquadrantenstellers 300 werden der erste Transistor 330 und der zweite Transistor 350 mittels der Gate-Anschlüsse 333, 353 abwechselnd zwischen leitendem und sperrendem Zustand umgeschaltet. Zu jedem Zeitpunkt ist einer der Transistoren 330, 350 leitend, der andere Transistor 330, 350 sperrend. Das Verhältnis der Einschaltdauer des ersten Transistors 330 zur Periodenlänge, also zur Summe der Einschaltdauern von erstem Transistor 330 und zweitem Transistor 350, wird als Modulationsindex a bezeichnet. Bei einem Modulationsindex a = 0,5 werden beide Transistoren 330, 350 beispielsweise abwechselnd für jeweils dieselbe Zeitdauer eingeschaltet.

Vorteilhafterweise ist es beim Zweiquadrantensteller 300 nicht notwendig, die Ausgangsspannungen 410, 420 zu regeln. Stattdessen kann der Zweiquadrantensteller in erster Ordnung mit einem konstanten Modulationsindex von a = 0,5, also mit einem Tastverhältnis von 50%, betrieben werden. Die Eingangsspannung 400 teilt sich dann automatisch in zwei gleiche Ausgangsspannungen 410, 420 auf.

Allerdings bilden sich im Zweiquadrantensteller 300 in dieser Betriebsart zwei nur schwach gedämpfte LC-Schwingkreise aus. Der erste Schwingkreis wird durch den ersten Kondensator 310 und die Spule 370 gebildet. Der zweite Schwingkreis wird durch den zweiten Kondensator 320 und die Spule 370 gebildet. Jeder der Schwingkreise weist eine Resonanzfrequenz $f_{res}$ mit

$$f_{res} = \frac{1}{2\pi\sqrt{LC}}$$

auf, wobei L die Induktivität der Spule 370 und C die Kapazität des jeweiligen Kondensators 310, 320 ist. Die Spule 370 kann beispielsweise eine Induktivität von L = 1 mH aufweisen. Der erste Kondensator 310 und der zweite Kondensator 320 können beispielsweise jeweils eine Kapazität von 500 µF aufweisen. Daraus ergibt sich eine Resonanzfrequenz $f_{res}$ von 225 Hz.

Der Dämpfungsgrad D der LC-Schwingkreise berechnet sich zu

$$D = \frac{R}{2}\sqrt{\frac{C}{L}}.$$

Unter der Annahme, dass die Spule 370 und die Leitungen einen elektrischen Widerstand R = 0,1 Ω (Ohm) aufweisen, ergibt sich ein Dämpfungsgrad D = 0,035. Die im Zweiquadrantensteller 300 gebildeten LC-Schwingkreise sind somit nur sehr schwach gedämpft. Dadurch ergäbe sich unter Umständen ein mangelhaftes regeltechnisches Verhalten des Zweiquadrantenstellers 300.

Um die Dämpfung der Schwingkreise des Zweiquadrantenstellers 300 zu erhöhen, wäre es möglich, zwischen dem dritten Knoten 303 und dem vierten Knoten 304 einen mit der Spule 370 in Reihe geschalteten elektrischen Widerstand von etwa 1 Ω (Ohm) einzufügen. An einem solchen Widerstand träte jedoch eine Verlustleistung auf, durch die sich der Wirkungsgrad des Zweiquadrantenstellers 300 verschlechtern würde.

Anstelle eines realen Widerstands kann aber vorteilhafterweise ein virtueller Widerstand 390 in Serie mit der Spule 370 zwischen dem dritten Knoten 303 und dem vierten Knoten 304 in den Zweiquadrantensteller 300 eingefügt werden. Hierzu muss der Modulationsindex a stromabhängig so beeinflusst werden, dass die sich ergebende Spannungsänderung sich genauso verhält wie ein stromabhängiger Spannungsabfall über den virtuellen Widerstand 390.

Hierzu weist der Zweiquadrantensteller 300 eine in Figur 3 nicht dargestellte Vorrichtung zum Messen der Stromstärke des in der Spule 370 fließenden Spulenstroms 375 auf. Diese Vorrichtung kann beispielsweise durch einen Nebenschlusswiderstand (Shunt) gebildet sein. Der Modulationsindex a wird dann so angepasst, dass er gleich der Summe aus dem Wert 0,5 und dem Verhältnis des Produkts der in der Spule 370 fließenden Stromstärke 375 (I) und des virtuellen Widerstands 390 (R) zur Größe der Eingangsspannung 400 (U) ist:

$$a = 0{,}5 + \frac{I \cdot R}{U}.$$

Die Größe des virtuellen Widerstands 390 kann zweckmäßigerweise wieder auf 1 Ω (Ohm) festgelegt werden. Der so errechnete Modulationsindex a gibt das Verhältnis der Dauer, in der der erste Transistor 330 leitend geschaltet ist, zur Summe der Zeitdauern, in denen der erste Transistor 330 und der zweite Transistor 350 leitend geschaltet sind, an.

Der Zweiquadrantensteller 300 weist eine wesentlich geringere Verlustleistung auf als herkömmliche Zweiquadrantensteller. Sollen beispielsweise zwei Antriebe mit je 1 kW Leistung durch eine Gleichspannung von 350 V versorgt werden, die aus einer Gleichspannung von 700 V erzeugt wird, so müsste ein herkömmlicher Zweiquadrantensteller für einen Strom von 2000 W / 350 V = 5,7 A ausgelegt werden. Falls der herkömmliche Zweiquadrantensteller einen Wirkungsgrad von etwa 96% aufweist, so entstünden im Volllastbereich etwa 80 W Verlustleistung.

Werden die beiden Antriebe jedoch am Zweiquadrantensteller 300 der Figur 3 in Reihe geschaltet, der erste Antrieb also durch die erste Ausgangsspannung 410 und der zweite Antrieb durch die zweite Ausgangsspannung 420 versorgt, so muss der Zweiquadrantensteller 300 nur einen Differenzstrom bereitstellen. Benötigen beide Antriebe jeweils die volle Leistung von 1 kW, so ist der Strom im Zweiquadrantensteller 300 gleich Null. Im schlechtesten Fall, in dem einer der Antriebe 1 kW benötigt und der andere Antrieb keine Leistung aufnimmt, fließen 1000 W / 350 V = 2,85 A durch den Zweiquadrantensteller 300. In einem Normalfall, in dem der erste Antrieb beispielsweise 800 W und der zweite Antrieb 600 W aufnimmt, muss der Zweiquadrantensteller 300 lediglich die ausgleichenden 200 W bereitstellen, was einem Strom von 0,6 A entspricht. Die Verlustleistung des Zweiquadrantenstellers 300 sinkt bei dieser Betriebsweise auf nur 8 W (4% * (800 W - 600W)) gegenüber 56 W bei einem herkömmlichen Zweiquadrantensteller (4% * (800 W + 600 W)).

Durch die Steuerung des Zweiquadrantenstellers 300 über den virtuellen Widerstand 390 ist eine Parallelschaltung von mehreren Stromversorgungen zur Steigerung der Leistung problemlos möglich.

Der Zwischenkreis des Zweiquadrantenstellers 300 könnte auch um zusätzliche Kapazitäten erweitert werden, die parallel zum ersten Kondensator 310 und/oder zum zweiten Kondensator 320 angeordnet werden. In diesem Fall stiege die Dämpfung des Zweiquadrantenstellers 300, wodurch der Zweiquadrantensteller 300 systembedingt noch stabiler würde.

In einer bevorzugten Weiterbildung des Zweiquadrantenstellers 300 weist dieser eine Hilfswicklung 385 auf, die gemeinsam mit der Spule 370 einen Transformator 380 bildet. Die Hilfswicklung 385 ist zwischen einem fünften Knoten 381 und einem sechsten Knoten 382 des Zweiquadrantenstellers 300 angeordnet.

Vorteilhafterweise kann mit der Hilfswicklung 385 eine galvanisch getrennte Spannung generiert werden. Hierbei wird demjenigen der Kondensatoren 310, 320 Energie entzogen, der sich auf der höheren Spannung befindet. Dadurch ergibt sich eine implizierte Symmetrierung, durch die der Wirkungsgrad des Zweiquadrantenstellers 300 weiter verbessert wird. Zwischen dem fünften Knoten 381 und dem sechsten Knoten 382 kann beispielsweise ein Gleichrichter angeordnet sein, über den ein weiterer Kondensator des Zweiquadrantenstellers 300 aufgeladen wird. Der Gleichrichter und der weitere Kondensator sind in Figur 3 nicht dargestellt. Die sich am weiteren Kondensator aufbauende Spannung kann beispielsweise zur Versorgung einer Motorbremse mit 24 $V_{dc}$ verwendet werden. Die Gewinnung dieser Hilfsspannung erfolgt mit sehr hohem Wirkungsgrad.

Die Hilfswicklung 385 kann auch für eine unterbrechungsfreie Stromversorgung genutzt werden. Es ist üblich, die in rotierenden Massen von Antrieben gespeicherte Energie im Fall eines Netzausfalls zur Versorgung kritischer Komponenten zu nutzen. In diesem Fall werden die Antriebe im Generatorbetrieb betrieben und die Energie aus den Antrieben über den Zweiquadrantensteller 300 rückgespeist. Dadurch kann der aus Spule 370 und Hilfswicklung 385 gebildete Transformator 380 auch im Fall eines Netzausfalls, also einer abfallenden Eingangsspannung 400, weiter Leistung zum fünften Knoten 381 und zum sechsten Knoten 382 abführen und somit zur unterbrechungsfreien Stromversorgung dienen. Dies erfolgt mit hohem Wirkungsgrad und erfordert nur einen geringen zusätzlichen Schaltungsaufwand.

Zusammengefasst stellt die Erfindung einen verbesserten Zweiquadrantensteller 300 bereit, mit dem sich zwei Antriebe oder zwei Gruppen von Antrieben in Reihe mit hohem Wirkungsgrad betreiben lassen. Der Zweiquadrantensteller 300 lässt sich in einer Ansteuerschaltung 100 verwenden. Dies hat den Vorteil, dass in der Ansteuerschaltung vorgesehene Umrichter dann mit MOSFET-Transistoren ausgebildet werden können, wodurch sich ihr Wirkungsgrad erhöht. Ein weiterer Vorteil des Zweiquadrantenstellers liegt in der Möglichkeit, mit geringem Aufwand über eine optionale Hilfswicklung aus dem Zwischenkreis mit besonders gutem Wirkungsgrad eine zusätzliche Versorgungsspannung zu gewinnen.

Bezugszeichenliste

| 100 | Ansteuerschaltung |
| 110 | Netzspannung |
| 120 | Gleichrichter |
| 130 | erste Gleichspannung |
| 140 | Zweiquadrantensteller |
| 150 | zweite Gleichspannung |
| 155 | dritte Gleichspannung |
| 160 | erster Umrichter |
| 165 | zweiter Umrichter |
| 170 | erste Drehspannung |
| 175 | zweite Drehspannung |
| 180 | erster Motor |
| 185 | zweiter Motor |
| 200 | Umrichter |
| 201 | erster Knoten |
| 202 | zweiter Knoten |
| 203 | dritter Knoten |
| 204 | vierter Knoten |
| 205 | fünfter Knoten |
| 210 | erste Halbbrücke |
| 211 | erster Transistor |
| 212 | erste Diode |
| 213 | zweiter Transistor |
| 214 | zweite Diode |
| 220 | zweite Halbbrücke |
| 221 | dritter Transistor |
| 222 | dritte Diode |
| 223 | vierter Transistor |
| 224 | vierte Diode |
| 230 | dritte Halbbrücke |
| 231 | fünfter Transistor |
| 232 | fünfte Diode |
| 233 | sechster Transistor |
| 234 | sechste Diode |
| 240 | Kondensator |
| 250 | Eingangsspannung |
| 260 | Ausgangsspannung |
| 300 | Zweiquadrantensteller |
| 301 | erster Knoten |
| 302 | zweiter Knoten |
| 303 | dritter Knoten |
| 304 | vierter Knoten |
| 310 | erster Kondensator |
| 320 | zweiter Kondensator |
| 330 | erster Transistor |
| 331 | Kollektor |
| 332 | Emitter |
| 333 | Gate |
| 340 | erste Diode |
| 341 | Kathode |
| 342 | Anode |
| 350 | zweiter Transistor |
| 351 | Kollektor |
| 352 | Emitter |
| 353 | Gate |
| 360 | zweite Diode |

361    Kathode
362    Anode
370    Spule
375    Spulenstrom
380    Transformator
381    fünfter Knoten
382    sechster Knoten
385    Hilfswicklung
390    virtueller Widerstand
400    Eingangsspannung
410    erste Ausgangsspannung
420    zweite Ausgangsspannung


**Patentansprüche**

1.  Ansteuerschaltung (100) für einen elektrischen Antrieb (180, 185),
    mit einem Zweiquadrantensteller (300, 140) mit einem ersten Knoten (301), einem zweiten Knoten (302), einem dritten Knoten (303) und einem vierten Knoten (304),
    wobei zwischen dem ersten Knoten (301) und dem zweiten Knoten (302) eine Eingangsspannung (400, 130) angelegt werden kann,
    wobei zwischen dem ersten Knoten (301) und dem dritten Knoten (303) eine erste Ausgangsspannung (410, 150) abgegriffen werden kann,
    wobei zwischen dem dritten Knoten (303) und dem zweiten Knoten (302) eine zweite Ausgangsspannung (420, 155) abgegriffen werden kann,
    wobei ein erster Kondensator (310) zwischen dem ersten Knoten (301) und dem dritten Knoten (303) angeordnet ist,
    wobei ein zweiter Kondensator (320) zwischen dem dritten Knoten (303) und dem zweiten Knoten (302) angeordnet ist,
    wobei ein Kollektor (331) eines ersten Transistors (330) mit dem ersten Knoten (301) und ein Emitter (332) des ersten Transistors (330) mit dem vierten Knoten (304) verbunden ist,
    wobei eine Kathode (341) einer ersten Diode (340) mit dem ersten Knoten (301) und eine Anode (342) der ersten Diode (340) mit dem vierten Knoten (304) verbunden ist,
    wobei ein Kollektor (351) eines zweiten Transistors (350) mit dem vierten Knoten (304) und ein Emitter (352) des zweiten Transistors (350) mit dem zweiten Knoten (302) verbunden ist,
    wobei eine Kathode (361) einer zweiten Diode (360) mit dem vierten Knoten (304) und eine Anode (362) der zweiten Diode (360) mit dem zweiten Knoten (302) verbunden ist,
    wobei eine Spule (370) zwischen dem dritten Knoten (303) und dem vierten Knoten (304) angeordnet ist,
    wobei der Zweiquadrantensteller (300, 140) eine Vorrichtung zum Messen eines durch die Spule (370) fließenden elektrischen Stroms (375) aufweist,

    wobei der Zweiquadrantensteller (300, 140) eine Einrichtung aufweist, die dazu ausgebildet ist, den ersten Transitor (330) und den zweiten Transistor (350) gemäß eines Modulationsindexes wechselweise zwischen leitendem und sperrendem Zustand umzuschalten,
    wobei der Modulationsindex so bemessen wird, dass er gleich der Summe aus dem Wert 0,5 und dem Verhältnis des Produkts der in der Spule (370) fließenden Stromstärke (375) und eines festgelegten virtuellen Widerstands (390) zur Größe der Eingangsspannung (400, 130) ist,
    wobei die Ansteuerschaltung (100) einen ersten Umrichter (160, 200) umfasst, der dazu vorgesehen ist, aus der ersten Ausgangsspannung (150, 410) des Zweiquadrantenstellers (300, 140) eine erste dreiphasige Drehspannung (170, 260) zu erzeugen,
    wobei die Ansteuerschaltung (100) einen zweiten Umrichter (165, 200) umfasst, der dazu vorgesehen ist, aus der zweiten Ausgangsspannung (155, 420) des Zweiquadrantenstellers (300, 140) eine zweite dreiphasige Drehspannung (175, 260) zu erzeugen.

2.  Ansteuerschaltung (100) gemäß Anspruch 1,
    wobei der erste Transistor (330) und/oder der zweite Transistor (350) Bipolartransistoren mit isolierter Gate-Elektrode sind.

3.  Ansteuerschaltung (100) gemäß einem der vorhergehenden Ansprüche,
    wobei der Zweiquadrantensteller (300, 140) eine Hilfswicklung (385) aufweist, die gemeinsam mit der Spule (370) einen Transformator (380) bildet.

4.  Ansteuerschaltung (100) gemäß Anspruch 3,
    wobei der Zweiquadrantensteller (300, 140) einen Gleichrichter und einen weiteren Kondensator umfasst,
    wobei der weitere Kondensator über den Gleichrichter mit der Hilfswicklung (385) verbunden ist.

5.  Ansteuerschaltung (100) gemäß einem der vorhergehenden Ansprüche,
    wobei ein elektrischer Widerstand in Serie mit der Spule (370) zwischen dem dritten Knoten (303) und dem vierten Knoten (304) angeordnet ist.

6.  Ansteuerschaltung (100) gemäß einem der vorhergehenden Ansprüche,
    wobei die Ansteuerschaltung (100) einen Gleichrichter (120) umfasst, der dazu vorgesehen ist, aus einer Netzspannung (110) eine erste Gleichspannung (130, 400) zu erzeugen,
    wobei die erste Gleichspannung (130, 400) als Eingangsspannung an den Zweiquadrantensteller (300, 140) angelegt werden kann.

7.  Ansteuerschaltung (100) gemäß einem der vorhergehenden Ansprüche,

wobei der erste Umrichter (160, 200) und/oder der zweite Umrichter (165, 200) einen MOSFET (211, 213, 221, 223, 231, 233) aufweist.

8.  Verfahren zum Betreiben einer Ansteuerschaltung (100) für einen elektrischen Antrieb (180, 185), die einen Zweiquadrantensteller (300, 140) mit einem ersten Knoten (301), einem zweiten Knoten (302), einem dritten Knoten (303) und einem vierten Knoten (304) aufweist,

wobei ein erster Kondensator (310) zwischen dem ersten Knoten (301) und dem dritten Knoten (303) angeordnet ist,

wobei ein zweiter Kondensator (320) zwischen dem dritten Knoten (303) und dem zweiten Knoten (302) angeordnet ist,

wobei ein Kollektor (331) eines ersten Transistors (330) mit dem ersten Knoten (301) und ein Emitter (332) des ersten Transistors (330) mit dem vierten Knoten (304) verbunden ist,

wobei eine Kathode (341) einer ersten Diode (340) mit dem ersten Knoten (301) und eine Anode (342) der ersten Diode (340) mit dem vierten Knoten (304) verbunden ist, wobei ein Kollektor (351) eines zweiten Transistors (350) mit dem vierten Knoten (304) und ein Emitter (352) des zweiten Transistors (350) mit dem zweiten Knoten (302) verbunden ist,

wobei eine Kathode (361) einer zweiten Diode (360) mit dem vierten Knoten (304) und eine Anode (362) der zweiten Diode (360) mit dem zweiten Knoten (302) verbunden ist,

wobei eine Spule (370) zwischen dem dritten Knoten (303) und dem vierten Knoten (304) angeordnet ist,

wobei zwischen dem ersten Knoten (301) und dem zweiten Knoten (302) eine Eingangsspannung (400, 130) angelegt wird,

wobei ein durch die Spule (370) fließender elektrischer Strom (375) gemessen wird,

wobei in einem ersten Zeitintervall mit einer ersten Dauer der erste Transistor (330) in einem leitenden Zustand und der zweite Transistor (350) in einem sperrenden Zustand betrieben wird,

wobei in einem zweiten Zeitintervall mit einer zweiten Dauer der erste Transistor (330) in einem sperrenden Zustand und der zweite Transistor (350) in einem leitenden Zustand betrieben wird,

wobei nach dem zweiten Zeitintervall wieder ein erstes Zeitintervall folgt,

wobei die erste und die zweite Dauer so bemessen werden, dass das Verhältnis der ersten Dauer zur Summe der ersten und der zweiten Dauer gleich der Summe aus dem Wert 0,5 und dem Verhältnis des Produkts der in der Spule (370) fließenden Stromstärke (375) und eines festgelegten virtuellen Widerstands (390) zur Größe der Eingangsspannung (400, 130) ist,

wobei zwischen dem ersten Knoten (301) und dem dritten Knoten (303) eine erste Ausgangsspannung (410, 150) abgegriffen wird,

wobei zwischen dem dritten Knoten (303) und dem zweiten Knoten (302) eine zweite Ausgangsspannung (420, 155) abgegriffen wird,

wobei aus der ersten Ausgangsspannung (150, 410) mit einem ersten Umrichter (160, 200) eine erste dreiphasige Drehspannung (170, 260) erzeugt wird, wobei aus der zweiten Ausgangsspannung (155, 420) mit einem zweiten Umrichter (165, 200) eine zweite dreiphasige Drehspannung (175, 260) erzeugt wird.

## Claims

1.  Drive circuit (100) for an electric drive (180, 185), comprising a two-quadrant chopper (300, 140) comprising a first node (301), a second node (302), a third node (303) and a fourth node (304),

wherein an input voltage (400, 130) can be applied between the first node (301) and the second node (302),

wherein a first output voltage (410, 150) can be tapped between the first node (301) and the third node (303), wherein a second output voltage (420, 155) can be tapped between the third node (303) and the second node (302),

wherein a first capacitor (310) is arranged between the first node (301) and the third node (303),

wherein a second capacitor (320) is arranged between the third node (303) and the second node (302),

wherein a collector (331) of a first transistor (330) is connected to the first node (301) and an emitter (332) of the first transistor (330) is connected to the fourth node (304),

wherein a cathode (341) of a first diode (340) is connected to the first node (301) and an anode (342) of the first diode (340) is connected to the fourth node (304),

wherein a collector (351) of a second transistor (350) is connected to the fourth node (304) and an emitter (352) of the second transistor (350) is connected to the second node (302),

wherein a cathode (361) of a second diode (360) is connected to the fourth node (304) and an anode (362) of the second diode (360) is connected to the second node (302),

wherein a coil (370) is arranged between the third node (303) and the fourth node (304),

wherein the two-quadrant chopper (300, 140) has an apparatus for measuring an electric current (375) flowing through the coil (370),

wherein the two-quadrant chopper (300, 140) has a device, which is configured to switch the first transistor (330) and the second transistor (350) alternately between a conducting and a blocking state according to a modulation index,

wherein the modulation index is measured in such a way that it is equal to the sum of the value 0.5 and the ratio of the product of the current intensity (375) flowing in the coil (370) and a fixed virtual resistance (390) to the magnitude of the input voltage (400, 130),

wherein the drive circuit (100) comprises a first converter (160, 200), which is provided to generate a first three-phase AC voltage (170, 260) from the first output voltage (150, 410) of the two-quadrant chopper (300, 140),

wherein the drive circuit (100) comprises a second converter (165, 200), which is provided to generate a second three-phase AC voltage (175, 260) from the second output voltage (155, 420) of the two-quadrant chopper (300, 140).

2. Drive circuit (100) according to Claim 1,
   wherein the first transistor (330) and/or the second transistor (350) are insulated-gate bipolar transistors.

3. Drive circuit (100) according to either one of the preceding claims,
   wherein the two-quadrant chopper (300, 140) has an auxiliary winding (385), which, together with the coil (370), forms a transformer (380).

4. Drive circuit (100) according to Claim 3,
   wherein the two-quadrant chopper (300, 140) comprises a rectifier and a further capacitor,
   wherein the further capacitor is connected to the auxiliary winding (385) via the rectifier.

5. Drive circuit (100) according to any one of the preceding claims,
   wherein an electrical resistor is arranged in series with the coil (370) between the third node (303) and the fourth node (304).

6. Drive circuit (100) according to any one of the preceding claims,
   wherein the drive circuit (100) comprises a rectifier (120), which is provided to generate a first DC voltage (130, 400) from a mains voltage (110),
   wherein the first DC voltage (130, 400) can be applied to the two-quadrant chopper (300, 140) as input voltage.

7. Drive circuit (100) according to any one of the preceding claims,
   wherein the first converter (160, 200) and/or the second converter (165, 200) has a MOSFET (211, 213, 221, 223, 231, 233).

8. Method for operating a drive circuit (100) for an electric drive (180, 185),

said drive circuit having a two-quadrant chopper (300, 140) comprising a first node (301), a second node (302), a third node (303) and a fourth node (304),

wherein a first capacitor (310) is arranged between the first node (301) and the third node (303),

wherein a second capacitor (320) is arranged between the third node (303) and the second node (302),

wherein a collector (331) of a first transistor (330) is connected to the first node (301) and an emitter (332) of the first transistor (330) is connected to the fourth node (304),

wherein a cathode (341) of a first diode (340) is connected to the first node (301) and an anode (342) of the first diode (340) is connected to the fourth node (304),

wherein a collector (351) of a second transistor (350) is connected to the fourth node (304) and an emitter (352) of the second transistor (350) is connected to the second node (302),

wherein a cathode (361) of a second diode (360) is connected to the fourth node (304) and an anode (362) of the second diode (360) is connected to the second node (302),

wherein a coil (370) is arranged between the third node (303) and the fourth node (304),

wherein an input voltage (400, 130) is applied between the first node (301) and the second node (302),

wherein an electric current (375) flowing through the coil (370) is measured,

wherein, in a first time interval with a first duration, the first transistor (330) is operated in a conducting state and the second transistor (350) is operated in a blocking state,

wherein, in a second time interval with a second duration, the first transistor (330) is operated in a blocking state and the second transistor (350) is operated in a conducting state,

wherein, after the second time interval, a first time interval follows again,

wherein the first and the second duration are measured in such a way that the ratio of the first duration to the sum of the first and the second duration is equal to the sum of the value 0.5 and the ratio of the product of the current intensity (375) flowing in the coil (370) and a fixed virtual resistance (390) to the magnitude of the input voltage (400, 130),

wherein a first output voltage (410, 150) is tapped between the first node (301) and the third node (303), wherein a second output voltage (420, 155) is tapped between the third node (303) and the second node (302), wherein a first three-phase AC voltage (170, 260) is generated from the first output voltage (150, 410) using a first converter (160, 200),

wherein a second three-phase AC voltage (175, 260) is generated from the second output voltage (155, 420) using a second converter (165, 200).

## Revendications

1. Circuit de commande (100) pour entraînement électrique (180, 185), présentant un hacheur (300, 140) à deux quadrants doté d'un premier noeud (301), d'un deuxième noeud (302), d'un troisième noeud (303) et d'un quatrième noeud (304), une tension d'entrée (400, 130) pouvant être appliquée entre le premier noeud (301) et le deuxième noeud (302), une première tension de sortie (410, 150) pouvant être prélevée entre le premier noeud (301) et le troisième noeud (303), une deuxième tension de sortie (420, 155) pouvant être prélevée entre le troisième noeud (303) et le deuxième noeud (302), un premier condensateur (310) étant disposé entre le premier noeud (301) et le troisième noeud (303), un deuxième condensateur (320) étant disposé entre le troisième noeud (303) et le deuxième noeud (302), le collecteur (331) d'un premier transistor (330) étant relié au premier noeud (301) et l'émetteur (332) du premier transistor (330) au quatrième noeud (304), la cathode (341) d'une première diode (340) étant reliée au premier noeud (301) et l'anode (342) de la première diode (340) au quatrième noeud (304), le collecteur (351) d'un deuxième transistor (350) étant relié au quatrième noeud (304) et l'émetteur (352) du deuxième transistor (350) au deuxième noeud (302), la cathode (361) d'une deuxième diode (360) étant reliée au quatrième noeud (304) et l'anode (362) de la deuxième diode (360) au deuxième noeud (302), une inductance (370) étant disposée entre le troisième noeud (303) et le quatrième noeud (304), le hacheur (300, 140) à deux quadrants présentant un dispositif de mesure du courant électrique (375) qui s'écoule dans l'inductance (370), le hacheur (300, 140) à deux quadrants présentant un dispositif configuré pour commuter en alternance entre un état conducteur et un état de blocage le premier transistor (330) et le deuxième transistor (350) en suivant un indice de modulation, l'indice de modulation étant dimensionné de manière à être égal à la somme de la valeur 0,5 et du rapport entre le produit de l'intensité du courant (375) qui s'écoule dans l'inductance (370) par une résistance virtuelle définie (390) et le niveau de la tension d'entrée (400, 130), le circuit de commande (100) comportant un premier convertisseur (160, 200) prévu pour former une première tension triphasée (170, 260) à partir de la première tension de sortie (150, 410) du hacheur (300, 140) à deux quadrants, le circuit de commande (100) comportant un deuxième convertisseur (165, 200) prévu pour former une deuxième tension triphasée (175, 260) à partir de la deuxième tension de sortie (155, 420) du hacheur (300, 140) à deux quadrants.

2. Circuit de commande (100) selon la revendication 1, dans lequel le premier transistor (330) et/ou le deuxième transistor (350) sont des transistors bipolaires à électrode de grille isolée.

3. Circuit de commande (100) selon l'une des revendications précédentes, dans lequel le hacheur (300, 140) à deux quadrants présente un enroulement auxiliaire (385) qui forme un transformateur (380) avec l'inductance (370).

4. Circuit de commande (100) selon la revendication 3, dans lequel le hacheur (300, 140) à deux quadrants comporte un redresseur et un autre condensateur, l'autre condensateur étant relié à l'enroulement auxiliaire (385) par l'intermédiaire du redresseur.

5. Circuit de commande (100) selon l'une des revendications précédentes, dans lequel une résistance électrique est raccordée en série à l'inductance (370) entre le troisième noeud (303) et le quatrième noeud (304).

6. Circuit de commande (100) selon l'une des revendications précédentes, dans lequel le circuit de commande (100) comporte un redresseur (120) prévu pour former une première tension continue (130, 400) à partir de la tension du réseau (110), la première tension continue (130, 400) pouvant être appliquée en tant que tension d'entrée sur le hacheur (300, 140) à deux quadrants.

7. Circuit de commande (100) selon l'une des revendications précédentes, dans lequel le premier convertisseur (160, 200) et/ou le deuxième convertisseur (165, 200) présentent un MOSFET (211, 213, 221, 223, 231, 233).

8. Procédé de conduite d'un circuit de commande (100) pour un entraînement électrique (180, 185) présentant un hacheur (300, 140) à deux quadrants doté d'un premier noeud (301), d'un deuxième noeud (302), d'un troisième noeud (303) et d'un quatrième noeud (304), un premier condensateur (310) étant disposé entre le premier noeud (301) et le troisième noeud (303), un deuxième condensateur (320) étant disposé entre le troisième noeud (303) et le deuxième noeud (302), le collecteur (331) d'un premier transistor (330) étant relié au premier noeud (301) et l'émetteur (332) du premier transistor (330) au quatrième noeud (304),

la cathode (341) d'une première diode (340) étant reliée au premier noeud (301) et l'anode (342) de la première diode (340) au quatrième noeud (304),

le collecteur (351) d'un deuxième transistor (350) étant relié au quatrième noeud (304) et l'émetteur (352) du deuxième transistor (350) au deuxième noeud (302),

la cathode (361) d'une deuxième diode (360) étant reliée au quatrième noeud (304) et l'anode (362) de la deuxième diode (360) au deuxième noeud (302),

une inductance (370) étant disposée entre le troisième noeud (303) et le quatrième noeud (304),

une tension d'entrée (400, 130) étant appliquée entre le premier noeud (301) et le deuxième noeud (302),

le courant électrique (375) qui s'écoule dans l'inductance (370) étant mesuré,

dans un premier intervalle de temps d'une première durée, le premier transistor (330) est placé à l'état conducteur et le deuxième transistor (350) à l'état de blocage,

dans un deuxième intervalle de temps d'une deuxième durée, le premier transistor (330) est amené à l'état de blocage et le deuxième transistor (350) à l'état conducteur,

un premier intervalle de temps suivant de nouveau le deuxième intervalle de temps,

la première et la deuxième durée étant dimensionnées de telle sorte que le rapport entre la première durée et la somme de la première et de la deuxième durée soit égal à la somme de la valeur 0,5 et du rapport entre le produit de l'intensité du courant (375) qui s'écoule dans l'inductance (370) par une résistance virtuelle définie (390) et le niveau de la tension d'entrée (400, 130),

une première tension de sortie (410, 150) étant prélevée entre le premier noeud (301) et le troisième noeud (303),

une deuxième tension de sortie (420, 155) étant prélevée entre le troisième noeud (303) et le deuxième noeud (302),

une première tension triphasée (170, 260) étant formée à partir de la première tension de sortie (150, 410) par un premier convertisseur (160, 200),

une deuxième tension triphasée (175, 260) étant formée à partir de la deuxième tension de sortie (155, 420) par un deuxième convertisseur (165, 200).

Fig. 1

Fig. 2

Fig. 3

**IN DER BESCHREIBUNG AUFGEFÜHRTE DOKUMENTE**

**In der Beschreibung aufgeführte Patentdokumente**

- JP 2001197757 A
- JP H02299499 A